(19) Europäisches Patentamt
European Patent Office
Office européen des brevets

(11) **EP 2 160 036 A2**

(12) **EUROPEAN PATENT APPLICATION**

(43) Date of publication:
**03.03.2010 Bulletin 2010/09**

(51) Int Cl.:
*H04N 7/26* [(2006.01)]     *H04N 7/30* [(2006.01)]

(21) Application number: **09380141.3**

(22) Date of filing: **28.07.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA RS**<br><br>(30) Priority: **01.09.2008 ES 200802529**<br><br>(71) Applicant: **Fundación Cetena**<br>**31110 Noain (Navarra) (ES)** | (72) Inventors:<br>• **Perez Abadia, Mariano**<br>**31110 Noain (Navarra) (ES)**<br>• **Ilundain Gorriti, Gorka**<br>**31110 Noain (Navarra) (ES)**<br>• **Lazcoz Lopez de Dicastillo, Miguel**<br>**31110 Noain (Navarra) (ES)**<br><br>(74) Representative: **Ungria Lopez, Javier et al**<br>**Avda. Ramón y Cajal, 78**<br>**28043 Madrid (ES)** |

(54) **Method of bit rate control in digital video compression systems based on MJPEG**

(57)     Method of bit rate control in digital video compression systems based on MJPEG, of the kind of method that links the coding of several consecutive images by means of the JPEG standard, which comprises a Discrete Cosine Transform block, a Quantification block and a Variable Length Coding VLC block, and which has the aim of guaranteeing a low and constant delay in the transmission during the course of the communication, being oriented towards platforms based on microprocessors for low-cost applications in which the rapid response to an event and the interactivity between the ends of the communication takes priority over the image quality, therefore it has special application in industrial environments in which both interactivity between the ends of the communication and a rapid response towards a possible event have to be permitted, as in the case of a video conference and a video entry phone.

Fig.1

EP 2 160 036 A2

## Description

## OBJECT OF THE INVENTION

As stated in the title of this descriptive specification, the following invention relates to a method of bit rate control in digital video compression systems based on MJPEG, with the aim of guaranteeing a low and constant delay in the transmission during the course of the communication.

Moreover, the method of bit rate control in digital video compression systems based on MJPEG is oriented towards platforms based on microprocessors for low-cost applications in which the rapid response to an event and the interactivity between the ends of the communication take priority over the image quality.

## FIELD OF APPLICATION

This specification describes a method of bit rate control in digital video compression systems based on MJPEG, having special application in industrial environments in which both interactivity between the ends of the communication and a rapid response towards a possible event need to be permitted, as in the case of a video conference and a video entry phone.

## BACKGROUND OF THE INVENTION

As it is known, the MJPEG video compression algorithm based on the JPEG standard does not form part of any international norm.

Moreover, the JPEG standard is defined for isolated images, and not for video. Consequently, the MJPEG algorithm carries out the compression of image sequences without considering the time dimension.

So, the MJPEG algorithm consists of the JPEG coding of each of the images making up a video, in such way that this algorithm only considers the spatial compression which reduces redundancy within an image. So, there does not exist any time compression, in other words, it does not take account of the redundancy between consecutive images.

The level of compression achieved by the JPEG algorithm depends on the complexity of the actual image, so that when it is wished to transmit this information via a communications channel fluctuations are produced in the bit rate, something that is not admissible in channels of the Constant Bit Rate (CBR) type.

So, a large number of video compression systems have been identified whose transmission is based on the use of large size elastic buffers and whose functioning absorbs the bit rate fluctuations that are produced in the communication by storing a variable number of images in the memory and transmitting them continuously. This solution, which can be suitable for multimedia broadcast applications, nevertheless produces very high and unacceptable delays in systems requiring interactivity and an instantaneous response to an event, as occurs in numerous industrial applications.

Moreover, we can consider different documents of patents relating to image compression methods, such as US 20030160799 which describes a method of compression and bit rate control that takes account of the segmentation process for the background of the image, US 6724817 which describes a bit rate control method based on the elimination of the frequency components below a certain threshold, and EP 1892965 in which the quantification levels of the frequency components are acted upon by means of the adaptive normalization of the quantification matrix.

## DESCRIPTION OF THE INVENTION

The present specification describes a method of bit rate control in digital video compression systems based on MJPEG, being of the kind of method that links the coding of several consecutive images by means of the JPEG standard, which comprises a Discrete Cosine Transform block, a Quantification block and a Variable Length Coding VLC block, which is of utility for its incorporation into platforms based on microprocessors for use in industrial applications requiring interaction between the ends of the communication or a rapid response to external events, such that the system comprises a double buffer (storage memory) in the transmission end whose status is fed back in order to adaptively quantify the image at the output of the Discrete Cosine Transform (DCT) or to discard the image at the output from the VLC module when the double buffer is occupied with an image being transmitted and an image waiting to be transmitted, carrying out the quantification as a function of the size of the image in the double buffer by means of quantification matrices, with the values of the quantification being obtained by the expression:

$$Q(u,v)=1+(1+u+v)\times q/8$$

where:

"u" and "v" are indices from 0 to 7 representing the row and column of each element of the quantification matrix that is associated with the coefficients of the 8x8 output block of the Discrete Cosine Transform (DCT).

and "q" is the value of the gradient of the planes described by the stated expression and which indicate the image quality. The greater q is, the greater the amount of quantification that will be carried out and the lower the image quality will be.

The implementation of a double buffer in transmission makes the transmission of an image simultaneous with the processing of the following one.

The transmission and processing of images in a buffer are excluding variables, so that while an image is being processed it cannot be transmitted and vice versa.

Moreover, the transmission and processing of images are alternate variables, so that a buffer cannot process or transmit several consecutive images, in other words, it processes and then transmits and so on successively.

The quantification of the image is adapted when its size is greater or less than a predetermined maximum value ($L_{max}$) or minimum value ($L_{min}$), respectively, via the modification of the value "q".

So, when the size of the image is greater than the maximum value ($L_{max}$) the quantification level is increased and when the size is smaller than the minimum value ($L_{min}$) the quantification level is decreased.

Furthermore, the greater the value of "q" the greater will be the gradient of the planes described and the quantification level, while the image quality will be less.

The value of "q" will increase or decrease from one image to another in discrete increments "dq", updating itself from image to image.

In order to complement the description that is going to be made forthwith, and with the aim of facilitating a better understanding of the characteristics of this invention, this specification is accompanied by a set of plans containing figures in which, on an illustrative rather than limiting basis, the most characteristic details of the invention have been represented.

## BRIEF DESCRIPTION OF THE DESIGNS

Figure 1. Shows a view of a basic diagram of image transmission, having represented the element that is in charge of the bit rate control. This element analyzes the status of the double buffer for acting on the one hand in the modification of the quantification coefficient and on the other in the elimination of the rejected images.

Figure 2. Shows a view of the bit rate control of the invention which is based on a double buffer, having represented the methodology of action.

Figure 3. Shows the coefficients of the quantification matrix obtained by means of the expression proposed for the values of q = 10, 20 and 30.

Figure 4. Shows the compression ratio (real image size/compressed image size) for a sequence of images (18 images). The values obtained are compared with and without the activation of the bit rate control algorithm and the threshold values are shown associated with Lmax and Lmin.

## DESCRIPTION OF A PREFERRED EMBODIMEM

The present invention claims a method of bit rate control in digital video compression systems based on MJPEG, such that the bit rate control module incorporates a quantification algorithm which acts on the coefficients resulting from the Discrete Cosine Transform (DCT).

The method compares the compression level achieved with a reference and recalculates the quantification levels corresponding to the following image.

The compression level achieved is obtained by inspecting the size of the compressed image.

Finally, the compressed image is stored in a structure based on a double buffer (memory element) in the transmitter end if any of the buffers is free, otherwise the image is discarded.

The present method permits the latency (delay accumulated between capture and transmission) to be kept to low levels in CBR (Constant Bit Rate) type transmission channels and so is very suitable in industrial scenarios where the interactivity and the response to events is very important.

As it has been described, although it is based on the JPEG standard, the MJPEG algorithm does not form part of any international norm. Moreover, the JPEG standard is defined for isolated images, not for video. Consequently, the MJPEG algorithm carries out the compression of image sequences without considering the time dimension (the redundancy existing between consecutive images).

The fact of not being a part of any standard allows certain freedoms to be introduced with respect to the JPEG algorithm itself. Indeed, for the present invention the variable length codes of the MPEG2 have been considered.

The algorithm is made up of a series of stages where some kind of processing is carried out on the image captured by the camera, segmented into subimages of 8x8 pixels. The operations performed in transmission always have their inverse in reception.

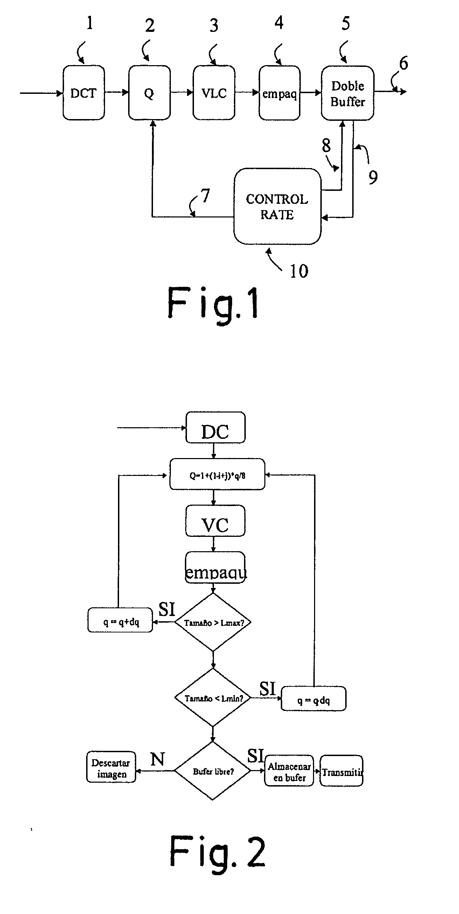

In accordance with figure 1 of the designs, the element 1 carries out the Discrete Cosine Transform (DCT), which converts the captured image into an image of frequencies.

Element 2 is in charge of carrying out quantification of the image of frequencies exiting from the DCT element.

Element 3 is in charge of carrying out the variable length coding where variable length codes are used.

Element 4 carries out a bit packing in order to produce a continuous stream of data to transmit.

Finally, we have the double buffer (storage memory) which stores the compressed and packed image in order to make it ready to transmit via the communications medium.

The existence of this double buffer is necessary for being able to parallelize the compression and transmission process.

Element 10 is in charge of the bit rate control, being responsible for the control over the quantity of information to transmit by means of two related but differentiated actions.

On the one hand, the quantification levels applied to the element 2 are updated, and on the other an image discarding technique is adopted: when the double buffer is occupied, in other words, when an image is being transmitted from one buffer and the other one contains an image waiting to be transmitted, then if a new compressed image arrives in this situation, it is discarded.

In this way, figure 2 of the designs represents the methodology that is adopted, and so: the image in frequencies resulting from the DCT operation is adaptively quantified taking into account the size of the immediately preceding image once compressed so that, depending on this compressed image, an update is carried out of the quality level "q" which determines the quantification level by means of the formula:

$$Q(u,v)=1+(1+u+v)\times q/8 \ .$$

So, the new quantification level is applied to the following image.

Moreover, once the image has been compressed the status of the double buffer is inspected, so that if neither of the double buffers is free the image is discarded.

This case occurs when one of the buffers contains an image that is being transmitted and the other contains an image waiting to be transmitted.

The bit rate control is carried out at two levels:

1.- Adaptation of the quantification level.
2.- Discarding of images when the memory dedicated to transmission is occupied by previous images being transmitted or waiting to be transmitted.

In accordance with figure 2 of the designs, the value "q" of the expression generating the quantification coefficients is increased or decreased by "dq" taking into account the values Lmin and Lmax which indicate the target compression range.

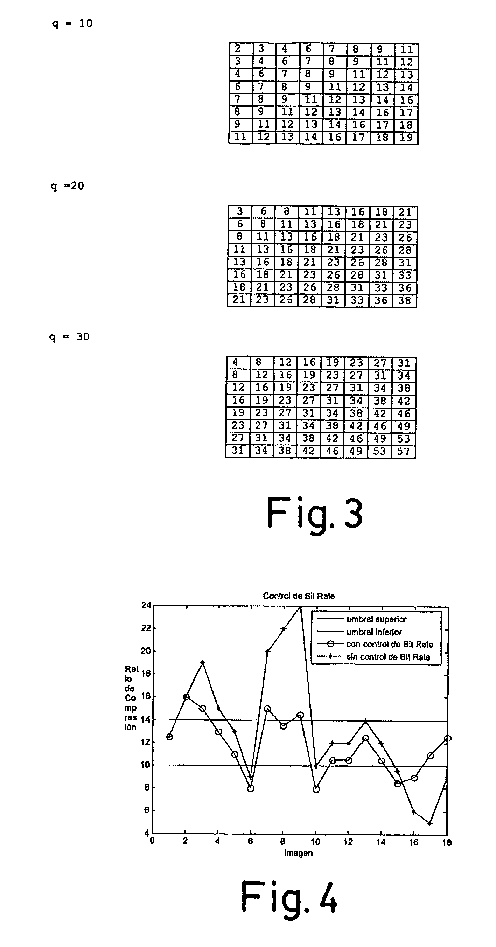

In accordance with figure 3 of the designs, some examples of the quantification matrix resulting from the use of the generator equation for various values of q = 10, 20 and 30 are shown.

In accordance with figure 4 of the designs, the result of using the present method for a sequence of 18 images is shown. The variability of the compression ratio and therefore of the bit rate is considerably reduced.

**Claims**

1.  METHOD OF BIT RATE CONTROL IN DIGITAL VIDEO COMPRESSION SYSTEMS BASED ON MJPEG, being of the kind of method that links the coding of several consecutive images by means of the JPEG standard, which comprises a Discrete Cosine Transform block, a Quantification block and a Variable Length Coding VLC block, which is of utility for its incorporation into platforms based on microprocessors for use in industrial applications requiring interaction between the ends of the communication or a rapid response to external events, **characterized in that** the system comprises a double buffer (storage memory) in the transmission end whose status is fed back in order to adaptively quantify the image at the output of the Discrete Cosine Transform (DCT) or to discard the image at the output from the VLC module when the double buffer is occupied with an image being transmitted and an image waiting to be transmitted, carrying out the quantification as a function of the image size in the double buffer by means of quantification matrices, with the quantification values being obtained by the expression:

    $$Q(u,v)=1+(1+u+v)\times q/8$$

    where:

    · "u" and "v" are indices from 0 to 7 representing the row and column of each element of the quantification matrix that is associated with the coefficients of the 8x8 output block of the Discrete Cosine Transform (DCT);
    · and "q" is the value of the gradient of the planes described by the stated expression and which indicate the image quality.

2.  METHOD OF BIT RATE CONTROL IN DIGITAL VIDEO COMPRESSION SYSTEMS BASED ON MJPEG, according to claim 1, **characterized in that** the implementation of a double buffer in transmission makes the transmission of an image simultaneous with the processing of the following one.

3.  METHOD OF BIT RATE CONTROL IN DIGITAL VIDEO COMPRESSION SYSTEMS BASED ON MJPEG, according to claims 1 and 2, **characterized in that** the transmission and processing of images in a buffer are excluding variables, so that while an image is being processed it cannot be transmitted and vice versa.

4.  METHOD OF BIT RATE CONTROL IN DIGITAL VIDEO COMPRESSION SYSTEMS BASED ON MJPEG, according to claims 1 and 2, **characterized**

**in that** the transmission and processing of images are alternate variables, so that a buffer cannot process or transmit several consecutive images.

5. METHOD OF BIT RATE CONTROL IN DIGITAL VIDEO COMPRESSION SYSTEMS BASED ON MJPEG, according to claim 1, **characterized in that** the quantification of the image is adapted when its size is greater or less than a predetermined maximum value ($L_{max}$) or minimum value ($L_{min}$), respectively.

6. METHOD OF BIT RATE CONTROL IN DIGITAL VIDEO COMPRESSION SYSTEMS BASED ON MJPEG, according to claims 1 and 5, **characterized in that** when the size of the image is greater than the maximum value the quantification level is increased and when the size is smaller than the minimum value the quantification level is decreased.

7. METHOD OF BIT RATE CONTROL IN DIGITAL VIDEO COMPRESSION SYSTEMS BASED ON MJPEG, according to claim 1, **characterized in that** the greater the value of "q" be, the greater will be the gradient of the planes described and the quantification level, while the image quality will be less.

8. METHOD OF BIT RATE CONTROL IN DIGITAL VIDEO COMPRESSION SYSTEMS BASED ON MJPEG, according to claim 1, **characterized in that** the value of "q" will increase or decrease from one image to another in discrete increments, updating itself from image to image.

# Fig.1

# Fig.2

q = 10

| 2 | 3 | 4 | 6 | 7 | 8 | 9 | 11 |
|---|---|---|---|---|---|---|---|
| 3 | 4 | 6 | 7 | 8 | 9 | 11 | 12 |
| 4 | 6 | 7 | 8 | 9 | 11 | 12 | 13 |
| 6 | 7 | 8 | 9 | 11 | 12 | 13 | 14 |
| 7 | 8 | 9 | 11 | 12 | 13 | 14 | 16 |
| 8 | 9 | 11 | 12 | 13 | 14 | 16 | 17 |
| 9 | 11 | 12 | 13 | 14 | 16 | 17 | 18 |
| 11 | 12 | 13 | 14 | 16 | 17 | 18 | 19 |

q = 20

| 3 | 6 | 8 | 11 | 13 | 16 | 18 | 21 |
|---|---|---|---|---|---|---|---|
| 6 | 8 | 11 | 13 | 16 | 18 | 21 | 23 |
| 8 | 11 | 13 | 16 | 18 | 21 | 23 | 26 |
| 11 | 13 | 16 | 18 | 21 | 23 | 26 | 28 |
| 13 | 16 | 18 | 21 | 23 | 26 | 28 | 31 |
| 16 | 18 | 21 | 23 | 26 | 28 | 31 | 33 |
| 18 | 21 | 23 | 26 | 28 | 31 | 33 | 36 |
| 21 | 23 | 26 | 28 | 31 | 33 | 36 | 38 |

q = 30

| 4 | 8 | 12 | 16 | 19 | 23 | 27 | 31 |
|---|---|---|---|---|---|---|---|
| 8 | 12 | 16 | 19 | 23 | 27 | 31 | 34 |
| 12 | 16 | 19 | 23 | 27 | 31 | 34 | 38 |
| 16 | 19 | 23 | 27 | 31 | 34 | 38 | 42 |
| 19 | 23 | 27 | 31 | 34 | 38 | 42 | 46 |
| 23 | 27 | 31 | 34 | 38 | 42 | 46 | 49 |
| 27 | 31 | 34 | 38 | 42 | 46 | 49 | 53 |
| 31 | 34 | 38 | 42 | 46 | 49 | 53 | 57 |

# Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030160799 A
- US 6724817 B

- EP 1892965 A